## Europäisches Patentamt
## European Patent Office
## Office européen des brevets

(11) Publication number: **0 142 943**
**B1**

(12) **EUROPEAN PATENT SPECIFICATION**

(45) Date of publication of patent specification: **10.01.90**

(51) Int. Cl.⁵: **F 16 F 13/00, B 60 K 5/12**

(21) Application number: **84307248.9**

(22) Date of filing: **22.10.84**

(54) Hydraulic-elastomeric mount.

(30) Priority: **23.11.83 US 554526**

(43) Date of publication of application:
**29.05.85 Bulletin 85/22**

(45) Publication of the grant of the patent:
**10.01.90 Bulletin 90/02**

(84) Designated Contracting States:
**DE FR GB**

(56) References cited:
**EP-A-0 027 751**
**EP-A-0 038 062**
**EP-A-0 115 174**
**EP-A-0 115 417**
**EP-A-0 133 588**
**GB-A-2 132 312**
**US-A-4 159 091**

(73) Proprietor: **GENERAL MOTORS CORPORATION**
**General Motors Building 3044 West Grand Boulevard**
**Detroit Michigan 48202 (US)**

(72) Inventor: **Muzechuk, Richard Allen**
**1109 Pepper Hill Drive**
**Kettering Ohio 45429 (US)**
Inventor: **Gold, Thomas Paul**
**1226 King Richard Parkway**
**West Carrollton Ohio 45449 (US)**

(74) Representative: **Denton, Michael John et al**
**Patent Section - Luton Office (F6) Vauxhall Motors Limited P.O. Box 3 Kimpton Road Luton Bedfordshire LU2 0SY (GB)**

## Description

This invention relates to a hydraulic-elastomeric mount and more particularly to an orifice and hydraulic damping decoupler therefor.

In the typical vibration isolating mount such as used for vehicle engines, a body of natural or synthetic rubber is normally employed. While these elastomeric mounts can be designed to operate in a generally satisfactory manner, such materials inherently have a low coefficient of damping which limits their ability to isolate certain objectionable vibratory inputs to the vehicle such as those particularly disturbing to a modern light-weight unitized vehicle body and frame construction. An increased damping coefficient is possible by the selection of certain rubber polymers and the use of additives but thus far this has proven unsatisfactory because of accompanying adverse affects on other properties of the rubber. Furthermore, this produces large damping for all vibratory inputs regardless of frequency or amplitude which is undesirable in an engine mount particularly in the low amplitude and high frequency ranges. Thus there is a major effort in progress for a cost-effective means of providing a prescribed and varying amount of damping best suited to damping vibrations of varying frequency and amplitude. In the case of an engine mount, this calls for substantially increased damping at certain low frequencies and high amplitudes but relatively low damping at low amplitudes and high frequencies. Furtheremore, the damping should be achieved in a way that does not compromise other design considerations such as prescribed stiffness ratios along the major axes and prescribed mount configurations to suit packaging space limitations.

Various vibration isolating mount designs have been proposed adding hydraulic damping, as shown, for example, in EP—A—0027751, features of which are disclosed in the precharacterising portion of Claim 1. However, they are lacking in various respects and particularly as to a more compact, cost-efficient way of providing a damping orifice with a large length-to-diameter ratio to meet the large damping requirement at low frequency. Then there is also the desire for a more compact, cost-efficient way of effectively preventing hydraulic damping below a certain amplitude which has been found to best isolate very low amplitude vibrations. In particular, in EP—A—0027751, a partition is defined by two substantially identical plates, and no arrangement is provided for assembling these plates in a subassembly. This has disadvantages regarding both cost and ease of assembly.

A hydraulic-elastomeric mount in accordance with the present invention is characterised over EP—A—0027751 by the features specified in the characterising portion of Claim 1.

The preferred embodiment of the present invention is incorporated with certain features of the hydraulic-elastomeric mount disclosed in EP—A—115174. In the above-disclosed mount, there is a hollow elastomeric body interconnecting a mounting member adapted to be secured to the engine and another mounting member adapted to be secured to the engine supporting structure of the vehicle. An elastomeric diaphragm closes the elastomeric body and forms therewith a closed cavity filled with liquid. A rigid partition divides the cavity into a primary chamber enclosed by the elastomeric body and a secondary chamber enclosed by the diaphragm and an orifice interconnects the chambers so that the liquid is forced to flow at a restricted rate from the primary to the secondary chamber upon contraction of the former and in the opposite direction on expansion thereof to provide a damping effect as the one mounting member vibrates relative to the other. The diaphragm is further configured so as to extend about and also over the periphery of the partition and thereby form a seal between the chambers as well as provide separate sealing thereof. Moreover, the diaphragm is configured to have a certain compliance at its rim permitting limited substantially free or soft travel of the partition forced by the liquid pressure in the chambers below a predetermined low vibration amplitude of one mounting member relative to the other but preventing such relative travel above such amplitude. And thus flow through the orifice and thereby the hydraulic damping is amplitude dependent and does not occur at very low amplitudes just by provision of the diaphragm rim configuration.

According to the present invention, the partition is formed by one of two plates having mating faces adjacent their periphery which are formed so as to co-operatively define an orifice between the plates extending compactly in a plane along and adjacent their periphery. Each of the plates is further formed so as to have a right-angle opening therethrough to one end only of the orifice so that it interconnects the chambers and has a length which may thereby be made substantially as expansive as the periphery of the plates and with the plate not forming the partition then needing only to be of annular or ring-shaped configuration in the formation of the orifice and the one opening thereto. This is of substantial advantage in the highly competitive engine mount business in that the orifice can be made in a very compact and cost-efficient way to have a large enough length-to-diameter ratio so as to peak the hydraulic damping with a certain magnitude at 10 Hz which has been found to be the optimum peak damping frequency for a wide range of vehicle engine mounting applications. Furthermore, it has been discovered that two or more identical orifices of lesser length-to-diameter ratio in parallel connection with the chambers can also locate the peak hydraulic damping at such a prescribed low frequency but with a reduction in the damping magnitude. It has also been discovered that in the case of multiple orifices, they may also be formed with different length-to-diameter ratios so as to produce multiple peaks of damping. The partition design of the present invention is also readily adaptive to the provision of such multiple orifices simply by forming each such orifice in the plate faces as before but now end-to-end with one or more other similarly formed orifices of the same or different cross-section and length.

Another feature is the provision of a hydraulic damping decoupler formed by two simple injection-moulded plastic parts that fit together in an opening through the partition plate so as to have limited free travel with respect thereto. A piston formed on one of the decoupler parts operates through the opening in the partition plate with the limited free travel to effect alternating volume change in the chambers so as to permit small vibratory amplitudes at low frequencies without forcing liquid through the orifice to thereby effectively eliminate hydraulic damping at these small vibratory amplitudes and low frequencies for further amplitude control in the mount apart from that provided by the above-described diaphragm rim. This substantially extends the range of usage in that the amplitude control by the diaphragm rim may remain constant while that by the decoupler can be readily changed to meet various amplitude control or damping criteria simply by varying the cross-sectional area and/or stroke of the decoupler piston.

Furthermore, the assembly of the hydraulic-elastomeric mount is simplified in that the partition plate and its orifice plate counterpart may be preassembled in the diaphragm and then mounted therewith on one mounting member as a subassembly. Then at final assembly, this subassembly is simply brought together with and secured to a second subassembly comprising the remaining mounting member with the elastomeric body bonded thereto and while both are submerged in the liquid to assure full fillage of the chambers.

This invention is further illustrated by way of example with reference to the accompanying drawings, in which:—

Figure 1 is a side view partially in section of a hydraulic-elastomeric mount incorporating the preferred embodiment of the present invention;

Figure 2 is a top view of the hydraulic-elastomeric mount in Figure 1;

Figure 3 is a sectional view taken along the line 3—3 in Figure 1;

Figure 4 is an exploded view of certain parts of the hydraulic-elastomeric mount in Figure 1;

Figure 5 is a reduced top view of the orifice defining partition and amplitude control displacement device in the hydraulic-elastomeric mount in Figure 1;

Figure 6 is a view similar to Figure 5 of another embodiment of the orifice defining partition;

Figure 7 is an enlarged sectional view taken along the line 7—7 in Figure 5;

Figure 8 is a sectional view taken along the line 8—8 in Figure 5; and

Figure 9 is a sectional view taken along the line 9—9 in Figure 6.

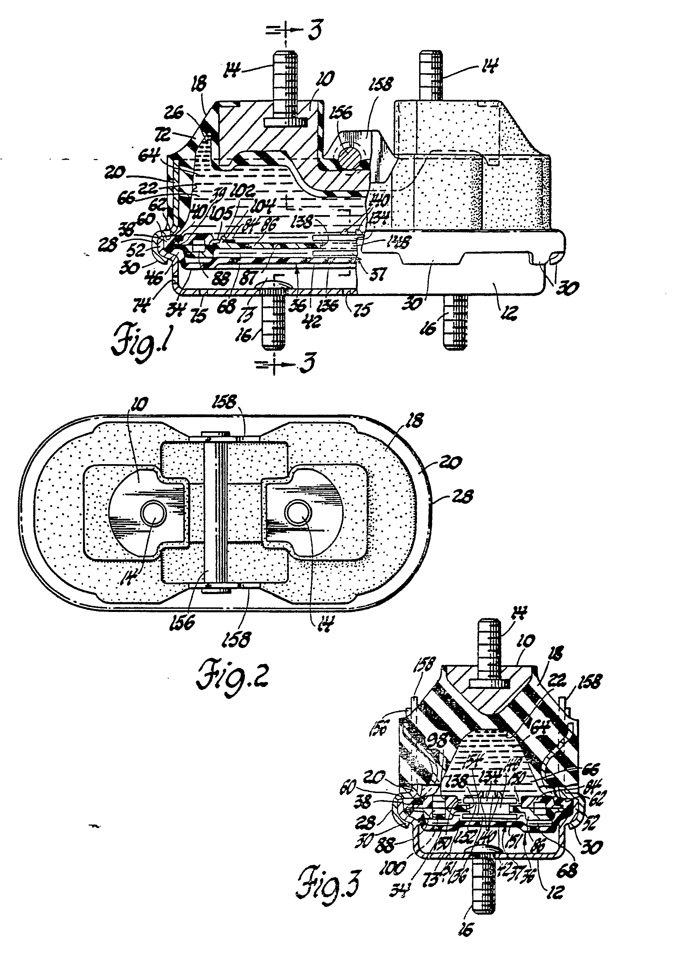

Referring to the drawings, there is shown a hydraulic-elastomeric mount incorporating the present invention and adapted for mounting an engine in a vehicle. The mount has a generally rectangular shape as viewed from the side in Figure 1 and a generally oval shape as viewed from the top in Figure 2 and comprises a yoke-shaped cast aluminium mounting member 10 and an oval dish-shaped stamped sheet metal mounting member 12. The mounting members 10 and 12 each have a pair of studs 14 and 16 respectively projecting outward therefrom for attachment to an engine (not shown) and an engine supporting member such as a frame or cradle (not shown) of the vehicle. A hollow elastomeric body 18 made of natural or synthetic rubber interconnects the mounting members 10 and 12 and to this end, is moulded to and about the yoke-shaped mounting member 10 and to both the interior and exterior of an oval-shaped stamped sheet metal retainer 20.

The elastomeric body is configured such that it essentially completely defines a hollow cavity 22 therein extending beneath and about the yoke-shaped mounting member 10 and interiorly of the retaining member 20 so as to positively prevent any leakage from the cavity outwardly past these parts while also having extensive surface attachment therewith. Moreover, the mounting member 10 with its studs 14, the elastomeric body 18 and the retainer 20 form a subassembly shown and designated as 24 in Figure 4. And it will be seen that the subassembly 24 is configured such that the elastomeric body can be moulded to these parts in a conventional two-piece mould without separate or loose core pieces using either injection or transfer moulding and with little finishing such as flash rubber removal required. This includes the formation of directional rate control effecting voids within the elastomeric body itself and as a part of the liquid cavity. For example, with diammetrically oppositely located voids 26 (only one of which is exposed in Figure 1) the mount is provided with a high or hard rate in one crosswise direction and both a relatively soft or low rate at low amplitudes and a non-linear high or hard rate at high amplitudes in a direction transverse thereto (vertical and horizontal direction respectively as viewed from the top in Figure 2), such differences in rates being especially useful in isolating certain combustion engine vibrations as is well known in the art.

The retainer 20 has an outwardly projecting collar 28 at its lower periphery with a plurality of circumferentially spaced tabs 30 which are initially formed to project straight downward as shown in Figure 4 to allow the collar 28 to receive a second subassembly 32. The latter subassembly 32 comprises the other mounting member 12, an oval-shaped elastomeric diaphragm 34 of natural or synthetic rubber, an oval-shaped partition and orifice assembly 36 and a hydraulic damping decoupler assembly 37. The elastomeric diaphragm 34 has an annular rim section 38 with a radially inwardly facing internal groove 39 and the shoulder 40 on the side of the groove opposite the spanning central portion 42 of the diaphragm is flexible to receive the periphery of the partition and orifice assembly 36. The periphery of the partition and orifice assembly is thus sandwiched as shown in Figure 1 between the shoulder 40 and the shoulder 46 on the opposite side of the groove, the latter should being formed integral with and extending radially outward from the central diaphragm portion 42 to join the latter with the diaphragm rim portion 38.

The lower mounting member 12 is formed with a collar 52 to receive the rim 38 of the diaphragm 34 with the partition and orifice assembly 36 in place and the damping decoupler assembly 37 having been previously assembled to the latter as will be described in more detail later and with such subassembly then adapted to be fit into the collar 28 of the retainer 20 of the other subassembly 24 prior to bending over of the tabs 30 to retain the whole amount assembly together. In such fit, the lower mounting member 12 is telescopically received in the retainer collar 28 with the rim 38 of the diaphragm pressed therebetween whereafter the tabs 30 of the retainer are bent over the collar 52 of the lower mounting member to retain the subassemblies 24 and 32 together as shown in Figure 1. In such assembly, the upper edge 60 of the collar 52 of the lower mounting member 12 engages the radial shoulder 62 of the collar 28 of the retainer 20 to determine the preload on the diaphragm rim 38 which plays a part in amplitude control as well as sealing as will be described in more detail later.

As seen in Figure 1, the elastomeric diaphragm 34 closes the elastomeric body 18 so as to form therewith a closed cavity generally designated as 64 which is divided by the partition and orifice assembly 36 into a primary chamber 66 enclosed by the elastomeric body 18 and a secondary chamber 68 enclosed by the diaphragm 34. However, prior to the closure of the cavity 64 at assembly, it is filled, as will be described in further detail later, with a liquid such as a commercial anti-freeze that will not freeze in the environment of the intended usage.

Assuming at this point that there is an orifice interconnecting the chambers 66 and 68, liquid in the primary chamber is forced to flow through such orifice at a restricted rate into the secondary chamber upon contraction of the primary chamber and in the opposite direction on expansion thereof to thereby provide a damping effect. Upon contraction of the primary chamber 66, the annular wall section 72 of the elastomeric body 18 extending between the mounting member 10 and the retainer 20 (see Figure 1) is caused to bulge outwardly while the liquid therein is forced to flow through the orifice into the chamber 68 to expand the latter as permitted by the elasticity of the diaphragm's central portion 42. Then on reversal in amplitude and resultantly expansion of the primary chamber 66, the stretched central diaphragm portion 42 retracts and thereby contracts the secondary chamber 68 forcing the liquid to flow back through the orifice into the primary chamber to complete the damping cycle. To assure otherwise free expansion and contraction of the secondary chamber 68, the space 73 between the diaphragm 34 and the lower mounting member 12 is vented to atmosphere through a plurality of radial holes 74 formed in the side of the latter part. In addition, a plurality of drain holes 75 are provided in the bottom of the mounting member 12 to prevent the accumulation of water therein which might freeze and present an obstacle to the movement of the diaphragm 34.

By virtue of the diaphragm 34 being configured at its rim 38 to both extend around and over the periphery of the partition and orifice assembly 36, there is formed a seal not only between the chambers but also a double seal between the chambers and the exterior resulting in excellent sealed integrity of the mount. Moreover, the diaphragm rim 38 is configured so as to permit limited substantially free or soft travel of the partition and orifice assembly 36 relative to the mounting members 10 and 12 below a predetermined low vibration amplitude of one mounting member relative to the other and to prevent such relative travel above such amplitude so that flow through the orifice between the chambers to effect damping does not occur until such prescribed low vibration amplitude is exceeded. For example, such free travel of the partition and orifice assembly 36 may be as much as ±1.0 mm depending on the installation.

This limited substantially uninhibited partition movement provides precise amplitude control and is simply effected with a predetermined compliance of the diaphragm rim 38 between the sandwiching retainer 20 and lower mounting member 12. To this end, the diaphragm rim 38 is free formed as shown in Figure 4 so as to have opposite facing annular sealing beads 78 and 80 at the outer perimeter and thinner but more radially extensive wall sections in the groove shoulders 40 and 46 which sandwich the periphery of the partition and orifice assembly 36. There is thus substantially more compliance of the sealing beads 78 and 80 which flatten at assembly to effect tight sealing while the partition capturing elastomeric shoulder or wall sections 40 and 46 are preloaded to a predetermined extent dependent on the amplitude responsiveness desired.

Furthermore as to the sealing, the diaphragm rim has an oval periphery 82 that is forced to engage the interior of the retainer collar 52 when the diaphragm rim 38 is clamped during final assembly and thereby co-operates with both of the face sealing beads 78 and 80 to provide double sealing between the chambers 66, 68 and atmosphere. On the other hand, the hydraulically biased partition and orifice assembly 36 is alternately forced against the elastomeric shoulder 40 and 46 of the diaphragm rim so as to maintain tight sealing between the chambers 66 and 68. For example, assuming that the primary chamber 66 is contracting and the hydraulic pressure therein is increasing, the partition and orifice assembly 36 is then pressed into very tight sealing contact with the lower shoulder 46 while the upper shoulder 40 is relaxing with such partition movement and while the double sealing provided by the sealing beads 78 and 80 remains substantially unaffected because of their effective isolation therefrom by reason of their separate compliance. Then when the secondary chamber 68 is contacting and the hydraulic pressure therein is increasing during the remainder of each damping cycle, the partition and orifice assembly 36 is hydraulically pressed into very tight sealing contact with the shoulder 40 to thereby maintain tightly sealed integrity between the chambers while the other chamber 66 relaxes and while double sealing is maintained between the chambers and atmosphere by the sealing bead 78 and 80.

The hydraulic-elastomeric mount as thus far described, apart from the general configuration (oval versus circular) and most particularly the partition and orifice assembly 36 and the damping decoupler assembly 37, is similar to that disclosed in the afore-mentioned EP—A—115174 which is hereby incorporated by reference. Reference is made thereto for a more detailed understanding of the various operating characteristics of the mount as compared with those of a typical conventional mount having only an elastomeric body.

Describing now the details of the preferred embodiment of the present invention, the partition and orifice assembly 36 is of two-piece injection moulded plastic construction and comprises a pair of oval-shaped plates 84 and 86 with matching peripheries. As best seen in Figures 1 and 3, the lower plate 86 has a cavity spanning wall 87 which acts to separate the chambers 66 and 68 while the upper plate 84 simply serves to co-operate with the lower partition plate to define in a minimum of space a damping orifice 88 interconnecting the two chambers in a manner such that the latter plate requires substantially less material since it then need only be of annular or ring-shaped configuration as shown. To this end, the upper annular plate 84 and the lower partition plate 86 have flat annularly extending mating faces 90 and 92 which in the embodiment shown in Figures 1—5, 7 and 8 are each formed with a single double-ended channel 94 and 96 therein which are of uniform depth and cross-section and wall thickness, and which co-operatively define the orifice 88 as a planar (non-spiraling) passage extending between the plates along and adjacent their periphery in an oval path just inwardly of and along the diaphragm rim 38. In addition, the plates 84 and 86 are each formed with an oval-shaped right-angle opening 98 and 100 therethrough to one end only of their respective channel 94 and 96 and thereby to one end only of the orifice 88 so that it interconnects the chambers and has a length which may thereby be made substantially as expansive as the periphery of the plates as best seen in Figure 5. Furthermore, it will be appreciated that a minimum of space is utilized in the formation of the orifice 88 and its interconnection with the chambers by reason of its planar layout and right-angle openings 98 and 100. Preferably, the cross-section of the channels 94 and 96 is rectangular and that of the orifice 88 is square for ease in mould making but it will be understood that the orifice could be formed with some other cross-sectional shape such as circular and also that the orifice could be formed with just one channel in the face of either of the plates. Also, for comparison purposes as to the commonly used dimensionless parameter of length-to-diameter ratio it will be assumed that the effective diameter of an orifice having a non-circular cross-section like that disclosed is approximately that of a circle having the equivalent area of such non-circular cross-section.

It has been found that the flow transition through such a right-angle opening to the orifice at each end can affect the peak damping frequency with the tendency to depress or lower same as the entering flow grows turbulent. However, it has been discovered that by simply making the flow area of the right-angle openings 98 and 100 about three times (3×) that of the orifice 88 the flow transition is maintained sufficiently smooth that it will not shift the peak damping frequency to any substantial degree.

Alignment of the channels 94 and 96 in defining the orifice is assured by forming the partition plate 86 with two right-angle pins 102 which are received in holes 104 formed in transverse webs 105 made integral with the annular plate 84 at locations inwardly of the channels. With the plates 84 and 86 accurately aligned by the pin and hole locators, it has been discovered that they need not be further retained together by the pins or some additional fastening against separation of their mating faces 90 and 92 as the preload on the diaphragm rim 38 at final assembly acting at the shoulders 40 and 46 of the rim groove 39 which captures the rims of the plates provides an adequate damping load to maintain the plate faces in tightly sealed contact. As a result, there is no need to hold close tolerances on the height of the pins 102 nor between the faces of the locator webs 105 on the annular plate 84 and the partition wall 87 formed with the other plate 86.

The plates 84 and 86 thus in a very compact and efficient way form the orifice 88 such that it can be made with a large effective length-to-diameter ratio such as in the range of 20—40 so as to peak the hydraulic damping with a certain magnitude at 10 Hz which has been found to be the optimum or best peak damping frequency for a wide range of vehicle engine mounting applications including both spark ignition and diesel type engines. But it has also been discovered that two or more identical orifices of lesser length-to-diameter ratio in parallel connection with the chambers can also be used to locate the peak hydraulic damping at such a prescribed low frequency but with an accompanying reduction in damping magnitude. Moreover, it has been discovered that with multiple orifices they may also be formed with different length-to-diameter ratios so as to provide multiple peaks of damping to aid in tuning to a prescribed damping response pattern and particularly where the major damping is to be spread over a wide frequency band and/or is to be kept relatively low.

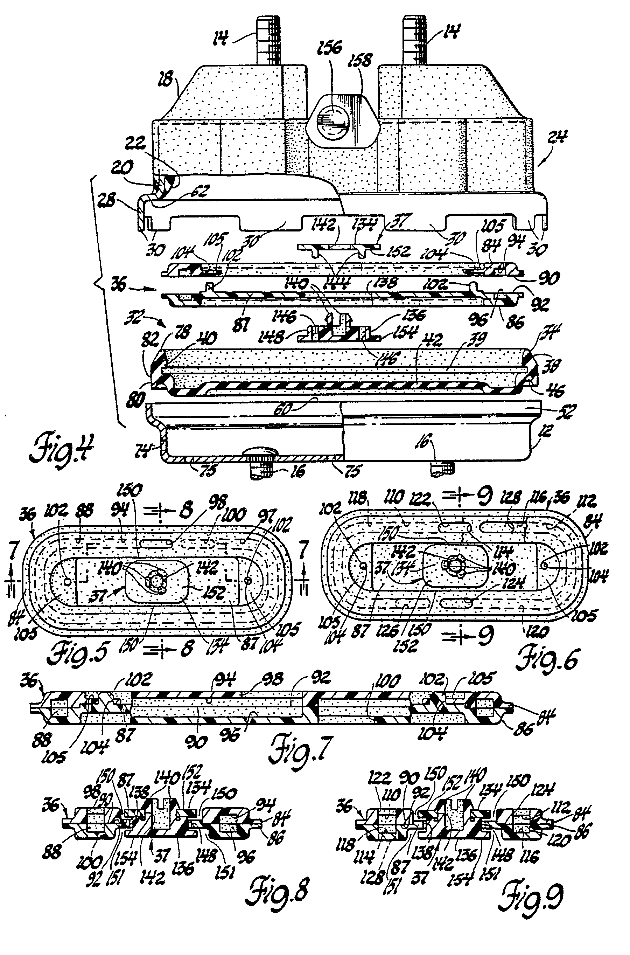

The combined partition and orifice design of the present invention is also readily adaptive to the provision of such multiple orifices simply by forming each such orifice in the partition plates as before but now end-to-end with one or more other similarly formed orifices extending along the periphery of the two-piece partition. The provision of two such orifices in parallel is shown in Figures 6 and 9. In this case the plates 84 and 86 are then formed with two double-ended channels 110, 112 and 114, 116 in their respective faces 90 and 92. The channels in each plate are arranged end-to-end and co-operatively define with the complementary channels in the other plate two separate orifices 118, 120 between the plates arranged end-to-end along and adjacent the periphery of the plates. Then like before, the plates 84 and 86 each have an opening 122, 124 and 126, 128 therethrough to one end only of their respective channels and thereby to each orifice 118, 120 to connect them in parallel with the chambers 66 and 68. And because of their oval layout, the total length of the two orifices may still be made substantially as expansive as the periphery of the plates. And thus for example, if in the Figure 5 embodiment the length-to-diameter ratio of the orifice 88 is prescribed at 30, the length-to-diameter ratio for the two orifices 118 and 120 in the Figure 6 embodiment could be made approximately half that or 15 to locate the peak damping at approximately the same low frequency.

Turning then to the hydraulic damping decoupler assembly 37, this device is also simply formed by two simple injection-moulded plastic parts 134 and 136 but which in this case are fixed to each other by a snap-fit connection through a central opening 138 in the single partition wall 87 formed with the partition plate 86 so as to have limited free travel with respect thereto as shown in both embodiments of the partition and orifice assembly 36. The snap-fit connection is provided by the formation of three upstanding prongs 140 on the lower decoupler part 136 which engage through the partition plate opening 138 and with a central round hold 142 in the other decoupler part 134. In addition, two downwardly projecting locator pins 144 formed on the underside of the upper decoupler part 134 are received in holes 146 in the lower decoupler part 136 to retain the parts in proper relative location.

Limited volume change in the chambers 66 and 68 to effect hydraulic decoupling (elimination of the hydraulic damping) below a prescribed low amplitude at low frequencies is provided by the lower decoupler part 136 being formed with an upstanding piston or volume displacement portion 148 which is slidably received in the partition plate opening 138. The opening 138 thus serves as a cylinder for the piston 148 which has a height greater than the cylinder length (i.e. the thickness of the partition wall 87) so as to have limited travel or stroke with respect thereto as determined by the rims of the decoupler parts which sandwich and are sealingly abuttable with the opposite sides of the partition wall 87 about the opening 138 as best seen in Figures 8 and 9. Because the limited free travel is dependent in part on only one wall thickness which is that of the single partition wall 87, the decoupler tolerance is much simpler to control than if there was a double wall. Moreover, the piston 148 and its cylinder 138 have a rectangular cross-section and profile respectively so as to prevent the decoupler from turning in the partition to maintain the side clearances 150 and 151 between the decoupler parts 134 and 136 and the respective plates 84 and 86.

The decoupler parts 134 and 136 each have an identical low profile rectangular box shape 152 and 154 occupying the respective chambers and the decoupler piston 148 by virtue of its limited free travel with respect to the partition in response to slow alternating pressure buildup in the two chambers 66 and 68 effects cyclic volume change in the chambers so as to permit small vibratory amplitudes at low frequencies such as up to 2 Hz without forcing liquid to flow therebetween through the one orifice 88 in the case of the Figure 5 embodiment or the two orifices 118 and 120 in the case of the Figure 6 embodiment. This effectively eliminates hydraulic damping below a prescribed low vibratory amplitude for further amplitude control in the mount apart from that provided by the above-described diaphragm rim 38 with its designed in compliance. The damping decoupler assembly 37 also substantially extends the range of usage of the mount in that the amplitude control by the diaphragm rim is relatively limited and may better remain constant in size so as not to require changes in the associated other parts while the damping decoupler can be readily changed to meet various amplitude control criteria without requiring other changes in the mount simply by varying the cross-sectional area and/or stroke of the decoupler piston 148.

The assembly of the hydraulic-elastomeric mount is simplified in that the two plates 84 and 86 forming the partition and orifice assembly 36 may be preassembled and thereafter the two parts 134 and 136 forming the damping decoupler assembly 37 may be preassembled on the former assembly and that all these parts may be preassembled in the diaphragm 34 and then mounted therewith on the lower mounting member 12 to form the subassembly 32. Then at final assembly, this main subassembly is simply brought together with and secured by the tabs 30 to the retainer 20 of the other main subassembly 24 and preferably while both these subassemblies are fully submerged in the liquid to assure full fillage of the chambers.

To assure that the mounting members 10 and 12 remain connected in the event that the elastomeric connection between the retainer 20 and the mounting member 10 is lost, there is provided a steel pin 156 which straddles the yoke-shaped mounting member 10 between its studs 14 and is secured at its opposite ends to a pair of upstanding flanges 158 formed on the retainer 20 as shown in Figures 1—4.

A hydraulic-elastomeric mount in accordance with the present invention may thus be readily adapted and tuned to meet a specific application to give the desired amplitude control as well as the coefficient of damping and resulting dynamic rate best suited to isolate a particular set of vibration conditions. Thus, a family of mounts can be cost-effectively offered with selectability of such important parameters as dynamic rate as well as amplitude control and in a very compact manner.

### Claims

1. A hydraulic-elastomeric mount comprising a pair of mounting members (10, 12), a hollow elastomeric body (18) interconnecting said mounting members, a closed cavity (64) that is filled with liquid, a partition (36) dividing said cavity into a chamber (66) enclosed by said elastomeric body and a second chamber (68), said partition comprising a partition plate (86) having a cavity spanning wall (87) which acts to separate the chambers (66, 68), and a second plate (84), said plates having mating faces (90, 92) formed so as to co-operatively define at least one orifice (88, 118, 120) therebetween extending in a plane and along and adjacent the periphery of said plates, each of said plates having an opening (98, 100, 122, 124, 126, 128) therethrough to one end only of said orifice so that said orifice interconnects said chambers and has a length which is thereby made substantially as expansive as the periphery of said plates, and limiting means (37, 38) allowing limited volume change in said chambers (66, 68) without forcing liquid through said orifice (88, 118, 120) at vibratory amplitudes below a prescribed level to thereby eliminate hydraulic damping by said orifice at such amplitudes; characterised by an elastomeric diaphragm (34) configured so as to close said elastomeric body (18) and form therewith the closed cavity (64); in that the second chamber (68) is enclosed by the elastomeric diaphragm; in that the second plate (84) is defined by a ring-shaped member located around the periphery of the partition plate (86); and in that said plates (84, 86) are peripherally sealingly mounted and retained together in a radially inwardly facing internal groove (39) in a rim (38) of said diaphragm (34).

2. A hydraulic-elastomeric mount as claimed in claim 1, characterized in that said plates (84, 86) co-operatively define a plurality of separate orifices (118, 120) therebetween arranged end-to-end and extending in a plane and along and adjacent the periphery of said plates, and each of said plates has an opening (122, 124, 126, 128) therethrough to one end only of each said orifice so that each orifice interconnects said chambers whereby said orifices are all connected in parallel between said chambers and have a total length which is thereby made substantially as expansive as the periphery of said plates.

3. A hydraulic-elastomeric mount as claimed in claim 1 or claim 2, characterized in that said faces (90, 92) each have at least one channel (94, 96, 110, 112, 114, 116) of uniform cross-section therein extending along and adjacent the periphery of the respective plate and co-operating with a complementary channel in the face of the other plate to define the orifice or orifices (88, 118, 120) between said plates.

4. A hydraulic-elastomeric mount as claimed in claim 3, characterized in that said faces (90, 92) each have a plurality of separate channels (110, 112, 114, 116) of uniform cross-section therein arranged end-to-end along and adjacent the periphery of the respective plate (84, 86) and cooperating with complementary channels in the face of the other plate to define a plurality of separate orifices (118, 120) between said plates, said orifices being connected in parallel between said chambers (66, 68).

5. A hydraulic-elastomeric mount as claimed in any one of the preceding claims, characterized in that said openings (98, 100, 122, 124, 126, 128) are at right-angles to said orifice or orifices (88, 118, 120) and have a flow area about three times that of said orifice or orifices.

6. A hydraulic-elastomeric mount as claimed in any one of the preceding claims, characterized in that said rim (38) on said diaphragm (34) supporting said plates (84, 86) is compliant so as to define said limiting means.

7. A hydraulic-elastomeric mount as claimed in any one of the preceding claims, characterized in that said plates (84, 86) are of moulded plastics material.

8. A hydraulic-elastomeric mount as claimed in any one of the preceding claims characterized in that said partition (36) also comprises hydraulic damping decoupler means (37) comprising a pair of parts (134, 136) adapted to be secured together through an opening (138) in said partition plate (86) so as to have limited free travel relative thereto, one of said parts (136) having a piston portion (148) received in said opening and extendable at opposite ends into said chambers (66, 68) so as to effect cyclic volume change in said chambers with said limited free travel, the hydraulic damping decoupler means thereby defining said limiting means, or additional limiting means.

9. A hydraulic-elastomeric mount as claimed in claim 8, characterized in that said parts (134, 136) of said hydraulic damping decoupler means (37) are of moulded plastics material.

### Patentansprüche

1. Hydraulisch-elastomere Befestigung mit zwei Befestigungsgliedern (10, 12), einem die Befestigungsglieder miteinander verbindenden hohlen Elastomerkörper (18), einem mit Flüssigkeit gefüllten geschlossenen Hohlraum (64), einer den Hohlraum in eine durch den Elastomerkörper umschlossene Kammer (66) und eine zweite Kammer (68) unterteilende Teilwand (36), wobei die Teilwand eine Teilplatte (86) mit einer Hohlraum überspannenden Wand (87) umfaßt, die ein Trennen der Kammern (66, 68) bewirkt, und eine zweite Platte (84), die Platten Paßflächen (90, 92) besitzen, die so geformt sind, daß sie zusammenwirkend mindestens eine sich in einer Ebene und längs und benachbart zum Umfang der Platten erstreckende Mündung (88, 118, 120) zwischen sich bestimmen, jede Platte eine Durchgangsöffnung (98, 100, 122, 124, 126, 128) besitzt zu nur einem Ende der Mündung, so daß die Mündung die Kammern verbindet und eine Länge aufweist, die dadurch im wesentlichen so weitreichend wie der Umfang der Platten gemacht wird, und Begrenzungsmitteln (37, 38), die begrenzte Volumenänderungen in den Kammern (66, 68) zulassen, ohne bei Vibrationsamplituden unter einem vorgeschriebenen Pegel Flüssigkeit durch die Mündung (88, 118, 120) zu drücken, um dadurch hydraulische Dämpfung durch die Mündung bei solchen Amplituden zu beseitigen, dadurch gekennzeichnet, daß eine elastomere Membran (34) vorgesehen ist, die so gestaltet ist, daß sie den Elastomerkörper (18) schließt und mit diesem den geschlossenen Hohlraum (64) bildet, daß die zweite Kammer (68) durch die elastomere Membran umschlossen ist, daß die zweite Platte (84) durch ein ringförmiges, um den Umfang der Teilplatte (86) angeordnetes Glied bestimmt ist und daß die Platten (84, 86) in Umfangsrichtung abdichtend abgebracht und zusammen in einer radial nach innen gewendeten Innennut (39) in einem Randbereich (38) der Membran (34) zurückgehalten sind.

2. Hydraulisch-elastomere Befestigung nach Anspruch 1, dadurch gekennzeichnet, daß die Platten (84, 86) zusammenwirkend eine Vielzahl separater Mündungen (118, 120) zwischen sich bestimmen, die Ende an Ende angeordnet sind und sich in einer Ebene und längs und benachbart dem Umfang der Platten erstrecken, und jede Platte eine Durchgangsöffnung (122, 124, 126, 128) nur zu einem Ende jeder Mündung besitzt, so daß jede Mündung die Kammern miteinander verbindet, wodurch die Mündungen alle parallel zwischen den Kammern angeschlossen sind und eine Gesamtlänge besitzen, die dadurch im wesentlichen so lang wie der Umfang der Platten gemacht ist.

3. Hydraulisch-elastomere Befestigung nach Anspruch 1 oder 2, dadurch gekennzeichnet, daß die Flächen (90, 92) jeweils mindestens eine Profilrinne (94, 96, 110, 112, 114, 116) von gleichförmigem Querschnitt in sich besitzen, die sich längs und benachbart zum Umfang der jeweiligen Platte erstreckt und in Zusammenwirkung mit einer komplementären Profilrinne in der Fläche der anderen Platte die Mündung oder die Mündungen (88, 118, 120) zwischen den Platten bestimmt.

4. Hydraulisch-elatomere Befestigung nach Anspruch 3, dadurch gekennzeichnet, daß die Flächen (90, 92) jeweils eine Vielzahl getrennter Profilrinnen (110, 112, 114, 116) mit gleichförmigem Querschnitt in sich besitzen, die Ende an Ende längs und benachbart zum Umfang der jeweiligen Platte (84, 86) angeordnet sind und zusammenwirkend mit komplementären Profilrinnen in der Fläche der anderen Platte eine Vielzahl getrennter Mündungen (118, 120) zwischen den Platten bestimmen, wobei die Mündungen parallel zwischen den Kammern (66, 68) angeschlossen sind.

5. Hydraulisch-elastomere Befestigung nach einem der vorangehenden Ansprüche, dadurch gekennzeichnet, daß die Öffnungen (98, 100, 122, 124, 126, 128) in rechten Winkeln zu der Mündung oder den Mündungen (88, 118, 120) liegen und eine Strömungsfläche von etwa dem dreifachen der der Mündung(en) besitzen.

6. Hydraulisch-elastomere Befestigung nach einem der vorangehenden Ansprüche, dadurch gekennzeichnet, daß der die Platten (84, 86) abstützende Randbereich (38) an der Membran (34) nachgiebig ist, um so die Begrenzungsmittel zu bestimmen.

7. Hydraulisch-elastomere Befestigung nach einem der vorangehenden Ansprüche, dadurch gekennzeichnet, daß die Platten (84, 86) aus geformtem Kunststoffmaterial bestehen.

8. Hydraulisch-elastomere Befestigung nach einem der vorangehenden Ansprüche, dadurch gekennzeichnet, daß die Teilwand (36) auch hydraulische Dämpfungs-Entkopplermittel (37) umfaßt aus zwei Teilen (134, 136), die ausgelegt sind, durch eine Öffnung (138) in der Teilplatte (86) aneinander befestigt zu sein, um so begrenzten Freiweg relativ dazu zu besitzen, wobei eines (136) der Teile einen in der Öffnung aufgenommenen und an entgegengesetzten Enden in die Kammern (66, 68) ausfahrbaren Kolbenabschnitt (148) besitzt, um so zyklische Volumenänderung in den Kammern mit dem begrenzten Freiweg zu bewirken, wobei das hydraulische Dämpfungs-Entkopplermittel dadurch die Begrenzungsmittel oder zusätzliche Begrenzungsmittel bestimmt.

9. Hydraulisch-elastomere Befestigung nach Anspruch 8, dadurch gekennzeichnet, daß die Teile (134, 136) des hydraulischen Dämpfungs-Entkopplermittels (37) aus geformtem Kunststoffmaterial bestehen.

**Revendications**

1. Support élastomère-hydraulique, comprenant deux pièces de montage (10, 12), un bloc élastomère creux (18) réunissant entre elles ces pièces de montage, une cavité fermée (64) qui est remplie de liquide, une cloison séparatrice (36) divisant cette cavité en une chambre (66) entourée par le bloc élastomère et une seconde chambre (68), la cloison séparatrice comprenant une plaque de cloison (86), comportant une paroi (87), s'étendant d'un côté à l'autre de la cavité, qui sert à séparer les chambres (66, 68), et une seconde plaque (84), ces plaques possédant des faces s'épousant (90, 92) ménagées de façon à coopérer pour délimiter, entre elles, au moins un passage (88, 118, 120) s'étendant dans un plan, le long du contour périphérique des plaques et au voisinage de celui-ci, chacune de ces plaques présentant un orifice (98, 100, 122, 124, 126, 128) le traversant pour conduire à une extrémité seulement du passage, de façon que ce passage fasse communiquer entre elles les chambres et ait une longueur ayant ainsi sensiblement la même étendue que le contour périphérique des plaques, et des moyens de limitation (37, 38) permettant une variation limitée de volume dans les chambres (66, 68) sans forcer du liquide à traverser le passage (88, 118, 120) pour des amplitude de vibration se trouvant au-dessous d'un niveau prescrit, de manière à éliminer ainsi l'amortissement hydraulique de la part du passage pour de telles amplitudes, caractérisé par un diaphragme élastomère (34) dont la configuration est telle qu'il ferme le bloc élastomère (18) et forme avec celui-ci la cavité fermée (64), en ce que la seconde chambre (68) est entourée par le diaphragme élastomère, en ce que la seconde plaque (84) est constituée par une pièce en forme d'anneau disposée le long du contour périphérique de la plaque de cloison (86), et en ce que les plaques (84, 86) sont montées, d'une manière étanche suivant leur contour périphérique, et maintenues ensemble, dans une gorge interne (39), faisant face radialement vers l'intérieur, ménagée dans un rebord (38) du diaphragme (34).

2. Support élastomère-hydraulique suivant la revendication 1, caractérisé en ce que les plaques (84, 86) coopèrent pour délimiter, entre elles, plusieurs passages distincts (118, 120) disposés bout à bout et s'étendant dans un plan, le long du contour périphérique des plaques et au voisinage de celui-ci, chacune de ces plaques comportant un orifice (122, 124, 126, 128) qui la traverse pour conduire à une extrémité seulement de chacun des passages, de façon que chaque passage fasse communiquer entre elles les chambres, les passages étant tous en communication en parallèle entre les chambres et ayant une longueur totale qui présente ainsi sensiblement la même étendue que le contour périphérique des plaques.

3. Support élastomère-hydraulique suivant la revendication 1 ou la revendication 2, caractérisé en ce que lesdites faces (90, 92) présentent, ménagée dans chacune, au moins une gorge (94, 96, 110, 112, 114, 116) de section transversale uniforme, s'étendant le long du contour périphérique de la plaque associée et au voisinage de celui-ci, et coopérant avec une gorge complémentaire ménagée dans la face de l'autre plaque pour délimiter le passage ou les passages (88, 118, 120) entre les plaques.

4. Support élastomère-hydraulique suivant la revendication 3, caractérisé en ce que lesdites faces (90, 92) présentent, ménagées dans chacune, plusieurs gorges distinctes (110, 112, 114, 116) de section transversale uniforme et disposées bout à bout, le long du contour périphérique de la plaque associée (84, 86) et au voisinage de celui-ci, et coopérant avec des gorges complémentaires ménagées dans la face de l'autre plaque, et façon à délimiter plusieurs passages distincts (118, 120) entre les plaques, ces passages étant en communication en parallèle entre les chambres (66, 68).

5. Support élastomère-hydraulique suivant l'une quelconque des revendications précédentes, caractérisé en ce que les orifices (98, 100, 122, 124, 126, 128) sont à angle droit par rapport au passage ou aux passages (88, 118, 120) et ont une section d'écoulement qui vaut environ trois fois celle de ce ou ces passages.

6. Support élastomère-hydraulique suivant l'une quelconque des revendications précédentes, caractérisé en ce que le rebord (38) prévu sur le diaphragme (34) et portant les plaques (84, 86) est élastique de façon à constituer lesdits moyens de limitation.

7. Support élastomère-hydraulique suivant l'une quelconque des revendications précédentes, caractérisé en ce que les plaques (84, 86) sont en matière plastique moulée.

8. Support élastomère-hydraulique suivant l'une quelconque des revendications précédentes, caractérisé en ce que la cloison séparatrice (36) comprend aussi des moyens découpleurs d'amortissement hydraulique (37) comprenant deux parties (134, 136) destinées à être fixées ensemble à travers une ouverture (138) ménagée dans la plaque de cloison séparatrice (86), de façon à présenter un déplacement libre limité par rapport à celle-ci, l'une de ces parties (136) présentant une partie formant piston (148) logée dans ladite ouverture et pouvant s'étendre à ses extrémités opposées dans les chambres (66, 68) de manière à réaliser une variation cyclique de volume dans ces chambres suivant ledit déplacement libre limité, les moyens découpleurs d'amortissement hydraulique constituant ainsi les moyens de limitation, ou des moyens supplémentaires de limitation.

9. Support élastomère-hydraulique suivant la revendication 8, caractérisé en ce que lesdites parties (134, 136) des moyens découpleurs d'amortissement hydraulique (37) sont en matière plastique moulée.

Fig.1

Fig.2

Fig.3

Fig.4

Fig.5

Fig.6

Fig.7

Fig.8

Fig.9